(19) **Europäisches Patentamt**

**European Patent Office**

**Office européen des brevets**

(11) **EP 1 138 650 B1**

(12) **EUROPEAN PATENT SPECIFICATION**

(45) Date of publication and mention
of the grant of the patent:
**11.06.2003 Bulletin 2003/24**

(51) Int Cl.[7]: **C04B 35/462**, C01G 23/00,
C04B 35/624, B01J 2/06

(21) Application number: **01302994.7**

(22) Date of filing: **29.03.2001**

(54) **Method of manufacturing lithium titanate pebbles**

Verfahren zur Herstellung von Lithiumtitanat Kugeln

Procédé de fabrication des boulets de titanate de lithium

(84) Designated Contracting States:
**DE FR IT NL**

(30) Priority: **31.03.2000 JP 2000096190**

(43) Date of publication of application:
**04.10.2001 Bulletin 2001/40**

(73) Proprietors:
 • **NGK INSULATORS, LTD.**
  **Nagoya-City, Aichi Prefecture 467-8530 (JP)**
 • **Japan Atomic Energy Research Institute**
  **Chiyoda-ku, Tokyo (JP)**

(72) Inventors:
 • **Tomita, Takahiro**
  **Nagoya-City, Aichi Pref. (JP)**
 • **Ichikawa, Shuichi**
  **Nagoya-City, Aichi Pref. (JP)**
 • **Iwadachi, Takaharu**
  **Nagoya-City, Aichi Pref. (JP)**

 • **Kawamura, Hiroshi**
  **Chiyoda-ku, Tokyo (JP)**
 • **Tsuchiya, Kunihiko**
  **Chiyoda-ku, Tokyo (JP)**

(74) Representative: **Paget, Hugh Charles Edward et al**
 **MEWBURN ELLIS**
 **York House**
 **23 Kingsway**
 **London WC2B 6HP (GB)**

(56) References cited:
 **FR-A- 2 715 651      FR-A- 2 761 057**

 • **LAAN VAN DER J G ET AL: "ProPERTIES OF
  LITHIUM METATINATE PEBBLES PRODUCED
  BY A WET PROCESS" JOURNAL OF NUCLEAR
  MATERIALS,AMSTERDAM,NL, vol. 271/272, 26
  October 1997 (1997-10-26), pages 401-404,
  XP001012462 ISSN: 0022-3115**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## Description

BACKGROUND OF THE INVENTION

1. Field of the Invention

The present invention relates to a method of manufacturing lithium titanate ($Li_2TiO_3$) pebbles, particularly relates to a method of manufacturing a lithium titanate pebbles preferably used in Li recycle of a used lithium titanate pebbles.

2. Description of Related Art

In a fusion reactor, tritium, which is hardly present in natural resources, is formed by reaction of a neutron and Li-containing ceramics. As such tritium breeding material, it is considered that Li-containing ceramics such as $Li_2O$, $LiAlO_2$, $Li_2TiO_3$ and so on are used, and they are used mainly in a form of a pebble.

$$^6Li + {}^1n \rightarrow {}^4He + {}^3T + 4.8MeV \text{ (exothermal reaction)}$$

As one method of manufacturing pebbles of Li-containing ceramics, there is disclosed, in Japanese Patent Laid-Open Publication No. 10-265222 (JP-A-10-265222), a technique in which lithium titanate ($Li_2TiO_3$) pebbles are manufactured by an indirect wet process. In this technique, the lithium titanate pebbles are manufactured according to the steps of: dispersing a lithium titanate powder as a raw material into a polyvinyl alcohol liquid solution so as to form a concentrate solution; dropping the concentrate solution into acetone from a nozzle so as to obtain a wet gel sphere; drying and calcining the wet gel sphere so as to eliminate polyvinyl alcohol so as to obtain a gel sphere; and sintering the gel sphere.

On the one hand, in Li-containing ceramics used being the tritium breeding material mentioned above, since Li element is very rare, it is necessary to perform the Li recycle in such a manner that the lithium titanate pebbles are remanufactured from the used tritium breeding material, for example, the used lithium titanate pebbles. From this viewpoint, if the method of manufacturing the lithium titanate pebbles disclosed in JP-A-10-265222 mentioned above is applied to the manufacturing of the lithium titanate pebbles from the used lithium titanate pebbles, the following problem arises.

That is to say, in the method mentioned above, the used lithium titanate pebbles can not be used directly as a raw material. Therefore, it is necessary to prepare the concentrate solution by: bringing the used lithium titanate pebbles into solution so as to recover Li element as $Li_2TiO_3$ powder; reacting the $Li_2CO_3$ powder with $TiO_2$ powder by calcining and so on so as to obtain $Li_2TiO_3$ single phase powder; and dispersing the $Li_2TiO_3$ single phase powder in the polyvinyl alcohol liquid solution. Therefore, in the method mentioned above, it is possible to manufacture the lithium titanate pebbles having excellent properties without using a known technique such as a nutation granulation method, but there is a drawback such that large manufacturing steps are necessary and as a result a necessary large cost is disadvantageous.

In order to eliminate the drawback mentioned above, a technique, in which the lithium titanate pebbles are obtained by directly dissolving the used lithium titanate pebbles, is disclosed on C.Alvani, S.Casadio et. al., "Reprocessing and Preparation of $Li_2TiO_3$ Pebbles Through Li-Ti-Peroxocomplexes Wet Granulation Method", The Seventh International Workshop on CERAMIC BREEDER BLANKET INTERACTIONS, Petten, Netherlands, (1998). However, in this method, the used lithium titanate pebbles are indeed directly dissolved, but the raw material powder is manufactured from the dissolved solution and then the lithium titanate pebbles are manufactured from the thus manufactured raw material powder according to the known nutation granulation method. Therefore, also in this method, there is a drawback such that large manufacturing steps are necessary and as a result a necessary large cost is disadvantageous.

SUMMARY OF THE INVENTION

An object of the present invention is to eliminate the drawback mentioned above and to provide a method of manufacturing lithium titanate pebbles in which the pebbles can be directly obtained from the used lithium titanate pebbles.

According to the invention, a method of manufacturing a lithium titanate pebble, comprises the steps of: subjecting a liquid solution including a lithium element and a titanium element to a drop formation so as to form a drop; making the formed drop in a solid state, while a shape of the drop is maintained, so as to form a solid state drop; and sintering the formed solid state drop. Moreover, in the preferred embodiment, the improvement comprises: a liquid solution preparing step for preparing a lithium titanate condensed liquid solution by subjecting a lithium titanate raw material powder to a liquid solution formation so as to form a liquid solution and condensing the formed liquid solution; a gel sphere forming step for forming a gel sphere by dropping the lithium titanate condensed liquid solution obtained at the liquid solution preparing step into a gelation solvent so as to form a primary gel sphere while maintaining a drop shape thereof, aging the formed primary gel sphere so as to form a wet gel sphere, exchanging a solvent in pores of the formed wet gel sphere by immersing the formed wet gel sphere into an exchanging solvent having a surface tension larger than that of the gelation solvent, and drying the wet gel sphere after the solvent exchanging; and a pebble sintering step for preparing a lithium titanate pebble by sintering the formed gel sphere obtained at the gel sphere forming step.

In the present invention, since a liquid solution including a lithium element and a titanium element is subjected to a drop formation so as to form a drop and the formed drop is made in a solid state, it is possible to obtain the lithium titanate pebbles having excellent properties by an easy manufacturing step. That is to say, in the preferred embodiment, when the lithium titanate pebbles are manufactured directly from the lithium titanate powder according to a direct wet method, the solvent in the wet gel sphere is exchanged by the exchanging solvent having a predetermined property. Therefore, in the case of drying the wet gel sphere, it is possible to induce a self-shrinkage of the gel sphere utilizing the surface tension of the solvent. In this case, if the thus obtained gel sphere is sintered, it is possible to obtain the dense lithium titanate pebbles having a spherical shape in which no cracks are generated.

In the further preferable embodiment, since it is considered that the used lithium titanate powder or pebble are used as the lithium titanate raw material powder, the Li recycle can be achieved. Moreover, since the liquid solution preparing step comprises the steps of: dissolving the lithium titanate raw material powder by a hydrogen peroxide solution so as to prepare a lithium titanate liquid solution; degassing the prepared lithium titanate liquid solution; and condensing the lithium titanate liquid solution after the degassing by an evaporation so as to form the lithium titanate condensed liquid solution for the dropping, it is possible to easily obtain the lithium titanate condensed liquid solution from the lithium titanate raw material powder by means of the direct wet method, and thus it is preferred. Further, since, in the step of dropping the lithium titanate condensed liquid solution into the gelation solvent, an inclined guide is set in a container accommodating the gelation solvent from a liquid level of the gelation solvent to a bottom surface of the container, and the dropped lithium titanate condensed liquid solution rolls or slips from the liquid level of the gelation solvent to the bottom surface of the container, it is possible to obtain the pebble having a more spherical shape, and thus it is preferred. Furthermore, since a concave portion and a convex portion having a dimension little larger than that of the dropped lithium titanate condensed liquid solution are arranged on a bottom surface of a container accommodating the gelation solvent, the dropped lithium titanate condensed liquid solutions are hardly adhered with each other, and thus it is preferred. Moreover, since the gelation solvent, in which the lithium titanate condensed liquid solution is dropped, is acetone and since the exchanging solvent having a surface tension larger than that of acetone is a mix liquid solution of acetone and propylene glycol, the present invention can be preferably achieved, and thus it is preferred.

BRIEF DESCRIPTION OF THE DRAWINGS

For better understandings of the present invention, reference is made to the attached drawings wherein:

Fig. 1 is a flowchart showing one embodiment of a method of manufacturing lithium titanate pebbles according to the invention;

Fig. 2 is a schematic view for explaining the embodiment such that a dry gel is obtained by drying a wet gel in the case that no solvent exchanging is performed;

Fig. 3 is a schematic view for explaining the embodiment such that a dry gel is obtained by drying a wet gel in the case that the solvent exchanging is performed;

Fig. 4 is a photomicrograph illustrating one embodiment of the pebble obtained according to the method in which no solvent exchanging is performed;

Fig. 5 is a photomicrograph depicting an enlarged surface of the pebble shown in Fig. 4;

Fig. 6 is a photomicrograph showing one embodiment of the pebble obtained according to the method in which the solvent exchanging is performed; and

Fig. 7 is a photomicrograph illustrating an enlarged surface of the pebble shown in Fig. 6.

DESCRIPTION OF THE PREFERRED EMBODIMENT

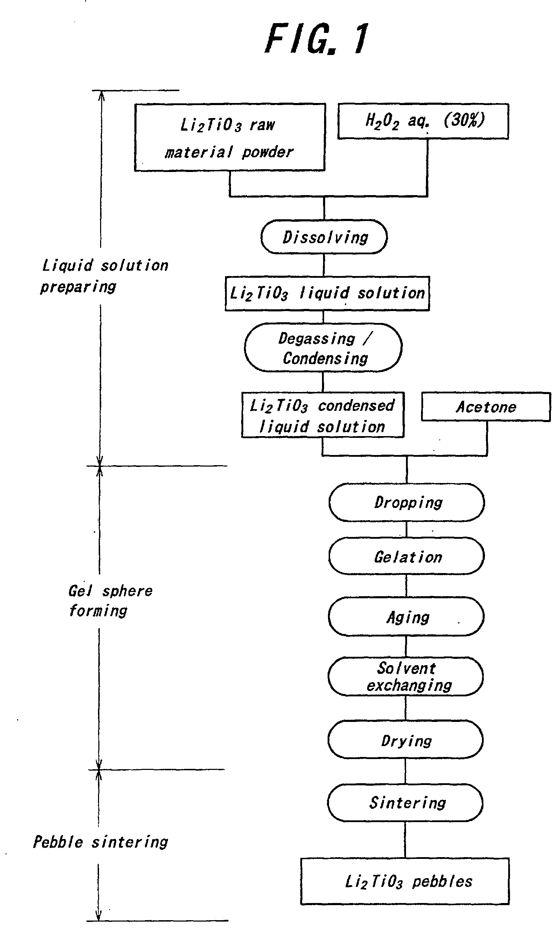

Fig. 1 is a flowchart showing one embodiment of a method of manufacturing lithium titanate pebbles according to the invention. Hereinafter, the method of manufacturing the lithium titanate pebbles utilizing a direct wet method according to the invention will be explained with reference to the flowchart shown in Fig. 1. The method according to the invention comprises mainly a liquid solution preparing step, a gel sphere forming step and a pebble sintering step. In this embodiment, in the liquid solution preparing step, a liquid solution including a lithium element and a titanium element is subjected to a drop formation so as to form a drop. In the gel sphere forming step, the formed drop is made in a solid state, while a shape of the drop is maintained. In the pebble sintering step, the formed solid state drop is sintered. In the preferred embodiment, in the liquid solution preparing step, a lithium titanate condensed liquid solution is prepared by subjecting a lithium titanate raw material powder to a liquid solution formation so as to form a liquid solution and condensing the formed liquid solution. Moreover, in the gel sphere forming step which is a main feature of the invention, a gel sphere is formed by dropping the lithium titanate condensed liquid solution obtained at the liquid solution preparing step into a gelation solvent so as to form a primary gel sphere while maintaining a drop shape thereof, aging the formed primary gel sphere so as to form a wet gel sphere, exchanging a solvent in pores of the formed wet gel sphere by immersing the formed wet gel sphere into an exchanging solvent having a surface tension larger than that of the gelation solvent, and drying the wet gel sphere after the solvent exchanging. Further, in the pebble sintering step, a lithium titanate pebble is prepared by sintering the formed gel sphere obtained.

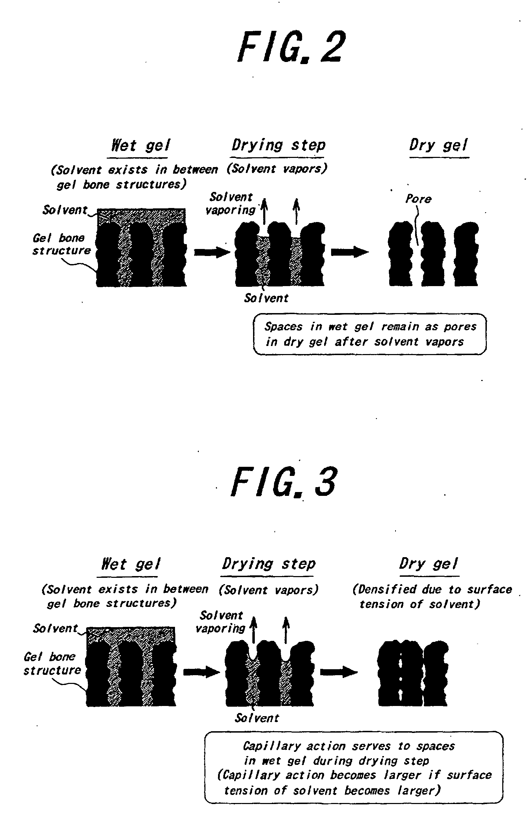

The main feature of the preferred embodiment lies in the solvent exchanging step. That is to say, the more dense and spherical pebbles can be obtained by performing the solvent exchanging step mentioned above. Hereinafter, the case in which no solvent exchanging is performed and the case in which the solvent exchanging is performed will be explained. Fig. 2 is a schematic view showing the embodiment such that a dry gel is obtained by drying a wet gel in the case that no solvent exchanging is performed, and Fig. 3 is a schematic view illustrating the embodiment such that a dry gel is obtained by drying a wet gel in the case that the solvent exchanging is performed. In the embodiment shown in Fig. 2 in which no solvent exchanging is performed, when the solvent in the set gel vapors by drying, pores remain in the dry gel. Therefore, the pebble can be obtained, but it is porous and is not dense. Moreover, cracks are liable to remain on a surface of the dry gel. On this one hand, in the embodiment shown in Fig. 3 in which the solvent exchanging is performed, a capillary action serves to pores in the wet gel during a vaporization of the solvent, so that the dense dry gel can be obtained. Moreover, cracks are not generated on a surface of the dry gel. It is assumed that the solvent in the wet gel is exchanged by another solvent having a higher surface tension than that of the solvent just before drying and a self shrinkage of the wet gel is promoted by drying.

Hereinafter, respective steps will be explained in detail. In the liquid solution preparing step, since hydrogen peroxide and $Li_2TiO_3$ powders are drastically reacted with heating and bubbling, the dissolving is performed in a water bath controlled always under 20°C with stirring. Under such a condition, the stirring is kept till dissolving all the $Li_2TiO_3$ powders. The dissolving time is over 4 hours in the case of solid/liquid ratio of 2 g : 25 ml, and it is necessary to vary the dissolving time corresponding to a variation of the solid/liquid ratio. Moreover, if $Li_2TiO_3$ pebbles are used as a raw material instead of the powders, the dissolving reaction is hard to proceed. In this case, the dissolving time becomes sometimes over 24 hours. The liquid solution obtained in the manner mentioned above is a sol in which $Li_2TiO_3$ is dissolved or Li and Ti ions and hydroxide particles are suspended.

In the degassing step, in order to eliminate gas (oxygen or hydrogen peroxide) dissolved in the sol, the degassing is performed in a water bath controlled in a temperature range of 60°C ± 1 °C with stirring. The degassing time is about 5 hours in the case of solid/liquid ratio of 2 g : 25 ml in the starting liquid solution and varies corresponding to a variation of the solid/liquid ratio.

When the liquid solution is over 25 ml, it is preferred to perform the degassing in a lower temperature (about 40°C), since the sol is sometimes drastically reacted with heating and bubbling at 60°C. Moreover, in order to eliminate only gas element and in order not to evaporate the solvent (water element), it is further preferred to use a reflux tube.

In the condensing step, the viscosity of the sol is increased by evaporating a water element in the sol. In this step, the sol after degassing is set in a water bath controlled in a temperature range of 40°C ± 1 °C and is stirred. Under such a condition, a water element is gradually evaporated for condensing so as to obtain the sol having a desired viscosity. The desired viscosity can be obtained for about 20 hours in the case of the starting liquid solution of 25 ml (solid/liquid ratio of 2 g : 25 ml), but this time duration is varied corresponding to a variation of the solid/liquid ratio. Therefore, it is actually preferred to drop the condensed liquid solution into acetone. In this case, if a shape of the dropped condensed liquid solution is broken up, it is considered that the condensing is not sufficient. On one hand, if a shape of the dropped condensed liquid solution is maintained as it is, it is considered that the condensing is sufficient.

In the dropping step, the $Li_2TiO_3$ condensed liquid solution obtained at the liquid solution preparing step is dropped into acetone. The dropping operation of the $Li_2TiO_3$ condensed liquid solution is performed by using a pipette and so on normally and is performed by using a nozzle in the case that a mass manufacturing is required. In this case, a dimension of the drop can be varied by varying a nozzle diameter or an amount of one drop. It is preferred to use a large amount of acetone as a gelation solvent, and it is desired to use acetone of over 2 l in the case that the starting liquid solution is 25 ml. A dropping apparatus and a shape of the drop are important when the $Li_2TiO_3$ condensed liquid solution is dropped into acetone. If the condensed liquid solution is dropped directly into acetone as it is, a shape of the drop (the dropped condensed liquid solution) is deformed during sedimentation of the drop from a liquid level to a bottom surface of a container accommodating acetone. Therefore, in the preferred embodiment, it is necessary to roll or slip the drop to the bottom surface by utilizing an inclination. For this purpose, an inclined guide made of Teflon (trade name) such as a chute is set in the container from the liquid level to the bottom surface. The condensed liquid solution is dropped into acetone on the inclined guide, and the drop rolls or slips along the inclined guide, so that a shape of the drop becomes spherical and the drop reaches to the bottom surface. Moreover, in the preferred embodiment, a concave portion and a convex portion having a dimension little larger than that of the drop are arranged on the bottom surface of the container so as to adhere the drops with each other. For example, it is preferred to arrange a Teflon sheet having a thickness of 5 mm, a surface of which has the concave portion and the convex portion, on the bottom surface of the container.

In the gelation step, the gelation of the drop is performed in the gelation solvent. As the gelation solvent, use is typically made of acetone, but it is possible to use the other gelation solvent if it has a water removing property. Hereinafter, the embodiment in which use is made of acetone will be explained. A water element in the dropped condensed liquid solution is moved into acetone and a viscosity of the drop (the drop condensed liquid solution) becomes higher, so that a wet gel having a spherical shape can be obtained. In the aging step, the drop leaves at rest in acetone as it is. The leaving time is over one night after dropping. During this time interval, almost all the water element in the drop is moved into acetone, and Ti element or Li element existing in the drop in a form of hydroxide is subjected to a dehydration reaction and a condensation reaction, so that a growth of gel particles in the gel sphere proceeds. In this manner, a viscosity of overall gel sphere is increased and the gel sphere becomes in a solid state, so that the solid gel sphere has a certain degree of strength. During the gelation step and the aging step after dropping, a water element is always moved into acetone, and thus a concentration of water element in acetone increases. If a concentration of water element becomes in excess, a gelation reaction and an aging reaction are hard to proceed. Therefore, it is necessary to use a large amount of acetone as much as possible or to arrange an apparatus for removing a water element such as a column of molecular sieve in an acetone circulation route.

In the solvent exchanging step, the wet gel sphere after aging is picked up from acetone, and the picked up wet gel sphere is immersed into an exchanging solvent having a surface tension larger than that of acetone. As the exchanging solvent, a mix liquid solution of acetone and propylene glycol (mix volume ratio of 9:1) is used. In this case, acetone filled in pores of the wet gel sphere after aging is moved into the exchanging solvent, and then the exchanging solvent is moved into the pores of the wet gel sphere. As a result, a surface tension of the solvent filled in the pores becomes higher as compared with acetone before the solvent exchanging step. In the wet gel sphere to which the solvent exchanging step is performed as mentioned above, a shrinkage as shown in Fig. 3 occurs actively, and thus the densified dry gel sphere can be obtained. As the exchanging solvent, it is necessary to use a solvent having a similar property as that of acetone i.e. a solvent that is easy to mix with a water element at a certain degree (since a water element sometimes remains in the pores of the gel sphere) and that does not dissolve the gel sphere. For example, solvent having a surface tension larger than that of acetone is used. Moreover, in order to perform the shrinkage effectively, it is necessary to use the solvent that evaporates during the drying step after an evaporation of water element remaining in the pores in the gel sphere, and thus it is desired to use the solvent having boiling point higher than that of water.

In the drying step, the gel sphere after the solvent exchanging is set in a temperature controlled drying oven maintained in a temperature range of 40 - 150°C, and is dried under such a condition for over one night so as to obtain a dry gel sphere. In order to suppress a crack generation during the drying step as much as possible, it is further preferred to control the drying step in such a manner that a temperature in the bath is gradually increased for over three days. In this manner, a spherical dry gel sphere can be obtained.

In the sintering step, an uppermost temperature and a keeping time are decided corresponding to a particle size and a density of the dry gel sphere (pebble). For example, the sintering step is performed in an electric furnace at 1000°C - 1300°C for over 1 hour. In this case, a temperature ascending rate is controlled under 200°C/h. Also in this case, in order to suppress the crack generation, it is preferred to set a temperature ascending rate under 50°C/h.

Hereinafter, actual experiments will be explained. In the embodiment mentioned below, an experiment 1 shows the case in which no solvent exchanging is performed and an experiment 2 shows the preferable case in which the solvent exchanging is performed.

Experiment 1

At first, in the liquid solution preparing step, 25 ml of hydrogen peroxide solution having a condensation of about 30 % was filled in a beaker, and 2 g of $Li_2TiO_3$ powder was added therein as a raw material. Then, a mouth of the beaker was closed by a watch glass. After that, the beaker was set in a water bath controlled in a temperature range of 20±1°C, and the hydrogen peroxide was stirred by using a magnetic stirrer. Then, the stirring was continued for over 4 hours till all the $Li_2TiO_3$ powder was dissolved.

Then, as the degassing process, a temperature of the water bath was set to 60 ± 1°C, and the stirring was performed for over 2 hours by using the magnetic stirrer. In this case, the watch glass was maintained as it was a cap. Continuously, in order to condense a sol, the degassed sol was set in the water bath, a temperature of which was controlled in a range of 40±1°C, and the stirring was performed by using the magnetic stirrer. In this case, the watch glass as the cap was removed. Under such a condition, a water element was evaporated for about 20 hours, thereby condensing a sol till a desired viscosity. In this case, in order to confirm a condensing degree of the sol, the condensed liquid solution was actually dropped into acetone. Then, if a shape of the dropped condensed liquid solution was broken up, it was confirmed that the condensing was not sufficient. On the other hand, if a shape of the dropped condensed liquid solution was maintained as it was, it was confirmed that the condensing was sufficient. After that, if it was confirmed that the condensing was sufficient, the actual dropping operation was performed.

In the gel sphere forming step, at first, the condensed liquid solution was dropped in acetone of about 21. In this case, an inclined guide made of Teflon such as chute was arranged from a liquid level of acetone to a bottom surface of a container accommodating acetone, as a dropping apparatus. In addition, a Teflon sheet having a thickness of 0.5 mm, a surface of which had a concave portion and a convex portion having a dimension little larger than that of the drop, was preliminarily arranged on the bottom surface of the container. The condensed liquid solution was dropped in acetone in the container by using a pipette, and the drop rolled or slipped along the inclined guide so as to form a spherical shape. Then, the drop was kept in the convex portion one by one and was maintained as it was. The drop that became gradually a gel state was maintained as it was for over one night till the drop was completely in a solid state for aging. Then, the gel sphere after aging was set in a temperature controlled bath, and a drying was performed at 40°C for 24 hours. After that, a temperature was increased at a temperature ascending rate of 10°C/h till 80°C. After keeping at 80°C for 6 hours, a temperature was increased at the same temperature ascending rate till 110°C. Then, a temperature was kept at 110°C for 6 hours. After that, a temperature was increased at the same temperature ascending rate till 150°C. Then, a temperature was kept at 150°C for over 24 hours for drying so as to obtain a dry gel sphere. Then, the dry gel sphere was sintered in an electric furnace at 1100°C for 4 hours. In this case, a temperature ascending rate was 200°C/h.

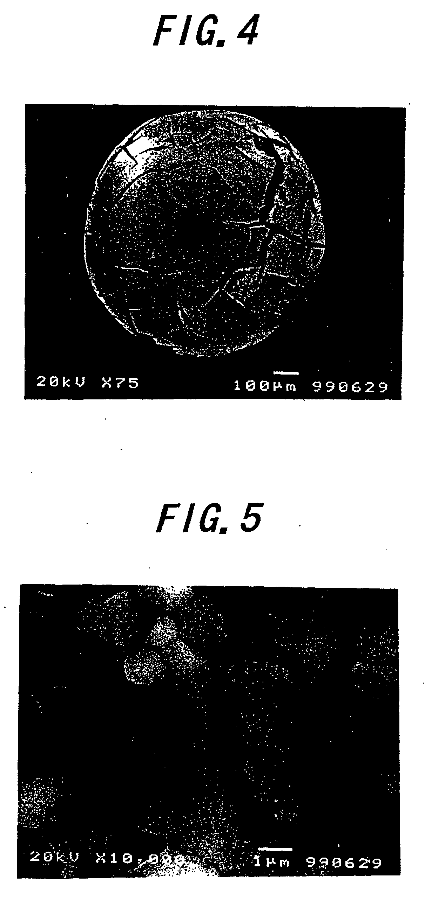

The $Li_2TiO_3$ pebble obtained as mentioned above was observed by the scanning electron microscope. The results were shown in Figs. 4 and 5 respectively at different magnifications. As clearly understood from the pebble appearance shown in Fig. 4, cracks were generated in the pebble, but the pebble had a spherical shape. Moreover, as clearly understood from the enlarged view shown in Fig. 5, a particle size of the particles constituting the spherical pebble was relatively small and was less than 5 µm. Further, crystal phases of the pebble were identified by a powder X-ray diffraction method. As a result, the spherical pebble was constituted by a single $Li_2TiO_3$ phase.

Experiment 2

As same as the experiment 1, the wet gel sphere after aging was obtained after the liquid solution preparing step. Then, in the solvent exchanging step, the wet gel sphere after aging was picked up from acetone, and the picked up wet gel sphere was immersed and then maintained in a mix liquid solution of acetone and propylene glycol (volume ratio of 9:1). In this case, an amount of the mix liquid solution was about half of acetone utilizing as the gelation solvent. Moreover, the exchanging time was over 30 minutes. The wet gel sphere after the solvent exchanging was set in the temperature controlled bath, and was dried at 40°C for 24 hours. After that, the temperature was increased at a temperature ascending rate of 10°C/h till 80°C. Then, a temperature was kept at 80°C for 6 hours. After that, a temperature was increased at the same temperature ascending rate till 110°C. Then, the temperature was kept at 110°C for 6 hours. After that, the temperature was increased at the same temperature ascending rate till 150°C. Then, the temperature was kept at 150°C for over 24 hours for drying so as to obtain a dry gel sphere. Then, the dry gel sphere was sintered in an electric furnace at 1100°C for 4 hours. In this case, a temperature ascending rate was 200°C/h.

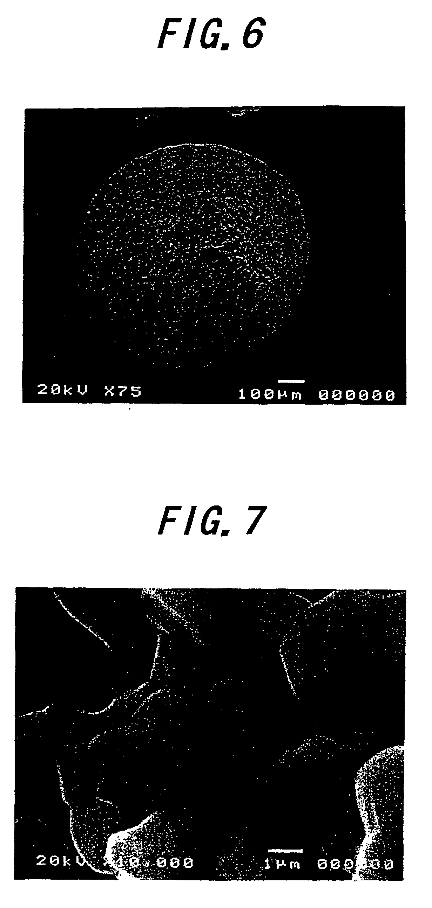

The $Li_2TiO_3$ pebble obtained as mentioned above was observed by the scanning electron microscope. The results were shown in Figs. 6 and 7 respectively at different magnifications. As clearly understood from the pebble appearance shown in Fig. 6, cracks were not generated in the pebble, and the pebble had a spherical shape, so that it was found that the pebble could be preferably used for a actual use. Moreover, as clearly understood from the enlarged view of the pebble shown in Fig. 7, a particle size of the particles constituting the spherical pebble was relatively small and was less than 5 µm. Further, crystal phases of the pebble were identified by a powder X-ray diffraction method. As a result, the spherical pebble was constituted by a single $Li_2TiO_3$ phase. If the embodiment shown in Figs. 4 and 5 in which no solvent exchanging is performed is compared with the embodiment shown in Figs. 6 and 7 in which the solvent exchanging is performed, it is understood that the pebble according to the embodiment in which the solvent exchanging is performed has no cracks and has a more spherical shape as compared with the pebble according to the embodiment in which no solvent exchanging is performed.

As clearly understood from the above explanations, according to the invention, when the lithium titanate pebbles are manufactured directly from the lithium titanate powder according to a direct wet method, the solvent in the wet gel sphere is exchanged by the exchanging solvent having a predetermined property. Therefore, in the case of drying the wet gel sphere, it is possible to induce a self-shrinkage of the gel sphere utilizing the surface tension of the solvent. In this case, if the thus obtained gel sphere is sintered, it is possible to obtain the dense lithium titanate pebbled having a spherical shape in which no cracks are generated.

## Claims

1. A method of manufacturing a lithium titanate pebble, comprising the steps of:

   subjecting a liquid solution including a lithium element and a titanium element to a drop formation so as to form a drop;
   making the formed drop in a solid state, while a shape of the drop is maintained, so as to form a solid state drop; and

sintering the formed solid state drop.

2. The method of manufacturing a lithium titanate pebble according to claim 1, wherein the improvement comprises:

a liquid solution preparing step for preparing a lithium titanate condensed liquid solution by subjecting a lithium titanate raw material powder to a liquid solution formation so as to form a liquid solution and condensing the formed liquid solution;
a gel sphere forming step for forming a gel sphere by dropping the lithium titanate condensed liquid solution obtained at the liquid solution preparing step into a gelation solvent so as to form a primary gel sphere while maintaining a drop shape thereof, aging the formed primary gel sphere so as to form a wet gel sphere, exchanging a solvent in pores of the formed wet gel sphere by immersing the formed wet gel sphere into an exchanging solvent having a surface tension larger than that of the gelation solvent, and drying the wet gel sphere after the solvent exchanging; and
a pebble sintering step for preparing a lithium titanate pebble by sintering the formed gel sphere obtained at the gel sphere forming step.

3. The method of manufacturing a lithium titanate pebble according to claim 2, wherein a powder or a pebble of a used lithium titanate is used as the lithium titanate raw material powder.

4. The method of manufacturing a lithium titanate pebble according to claim 2, wherein the liquid solution preparing step comprises the steps of:

dissolving the lithium titanate raw material powder by a hydrogen peroxide solution so as to prepare a lithium titanate liquid solution;
degassing the prepared lithium titanate liquid solution; and
condensing the lithium titanate liquid solution after the degassing by an evaporation so as to form the lithium titanate condensed liquid solution for the dropping.

5. The method of manufacturing a lithium titanate pebble according to claim 2, wherein, in the step of dropping the lithium titanate condensed liquid solution into the gelation solvent, an inclined guide is set in a container accommodating the gelation solvent from a liquid level of the gelation solvent to a bottom surface of the container, and the dropped lithium titanate condensed liquid solution rolls or slips from the liquid level of the gelation solvent to the bottom surface of the container.

6. The method of manufacturing a lithium titanate pebble according to claim 2, wherein a concave portion and a convex portion having a dimension little larger than that of the dropped lithium titanate condensed liquid solution are arranged on a bottom surface of a container accommodating the gelation solvent.

7. The method of manufacturing a lithium titanate pebble according to claim 2, wherein the gelation solvent, in which the lithium titanate condensed liquid solution is dropped, is acetone.

8. The method of manufacturing a lithium titanate pebble according to claim 7, wherein the exchanging solvent having a surface tension larger than that of acetone is a mix liquid solution of acetone and propylene glycol.

**Patentansprüche**

1. Verfahren zur Herstellung eines Lithiumtitanat-Korns, folgende Schritte umfassend:

das Vornehmen eines Tropfenbildungsvorgangs mit einer flüssigen Lösung, die Lithium in Elementenform und Titan in Elementenform umfasst, um einen Tropfen zu bilden;

das Überführen des gebildeten Tropfens in einen festen Zustand, während die Gestalt des Tropfens beibehalten wird, um einen Tropfen in festem Zustand zu bilden; und

das Sintern des gebildeten Tropfens in festem Zustand.

2. Verfahren zur Herstellung eines Lithiumtitanat-Korns nach Anspruch 1, worin die Verbesserung umfasst:

einen Flüssiglösungsherstellungsschritt zur Herstellung einer kondensierten Lithiumtitanat-Flüssiglösung, indem ein Lithiumtitanat-Rohmaterialpulver einem Vorgang zur Bildung einer flüssigen Lösung unterzogen wird, um eine flüssige Lösung zu bilden, und die gebildete flüssige Lösung kondensiert wird;

einen Gelkugel-Bildungsschritt zum Bilden einer Gelkugel durch Eintropfen der im Flüssiglösungsherstellungsschritt erhaltenen kondensierten flüssigen Lithiumtitanatlösung in ein Gelierungslösungsmittel, um eine Gel-Primärkugel zu bilden, während dessen Tropfengestalt beibehalten wird, das Altern der gebildeten Gel-Primärkugel, um eine nasse Gelkugel zu bilden, das Austauschen eines Lösungsmittels in Poren der gebildeten nassen Gelkugel durch Eintauchen der gebildeten nassen Gelkugel in ein Austausch-Lösungsmittel, dessen Oberflächenspannung größer als jene des Gelierungslösungsmittels ist, und das Trocknen der nassen Gelkugel nach dem Austauschen des Lösungsmittels; und

einen Korn-Sinterschritt zur Herstellung eines Lithiumtitanat-Korns durch Sintern der im Gelkugel-Bildungsschritt gebildeten Gelkugel.

3. Verfahren zur Herstellung eines Lithiumtitanat-Korns nach Anspruch 2, worin ein Pulver oder ein Korn aus einem gebrauchten Lithiumtitanat als Lithiumtitanat-Rohmaterialpulver verwendet wird.

4. Verfahren zur Herstellung eines Lithiumtitanatkorns nach Anspruch 2, worin der Schritt der Herstellung der flüssigen Lösung die folgenden Schritte umfasst:

das Auflösen des Lithiumtitanat-Rohmaterialpulvers durch eine Wasserstoffperoxidlösung, um eine flüssige Lithiumtitanatlösung herzustellen;

das Entgasen der hergestellten flüssigen Lithiumtitanatlösung; und

das Kondensieren der flüssigen Lithiumtitanatlösung nach dem Entgasen durch Abdampfen, um die kondensierte flüssige Lithiumtitanatlösung zum Eintropfen zu bilden.

5. Verfahren zur Herstellung eines Lithiumtitanatkorns nach Anspruch 2, worin im Schritt des Eintropfens der kondensierten flüssigen Lithiumtitanatlösung in das Gelierungslösungsmittel eine geneigte Führung in einen Behälter, in dem das Gelierungslösungsmittel aufgenommen ist, von einem Flüssigkeitsspiegel des Gelierungslösungsmittels bis zu einer Bodenfläche des Behälters angeordnet wird und die eingetropfte flüssige kondensierte Lithiumtitanatlösung vom Flüssigkeitsspiegel des Gelierungslösungsmittel zur Bodenfläche des Behälters rollt oder gleitet.

6. Verfahren zur Herstellung eines Lithiumtitanatkorns nach Anspruch 2, worin ein konkaver Abschnitt und ein konvexer Abschnitt, deren Abmessungen etwas größer als jener der eingetropften kondensierten flüssigen Lithiumtitanatlösung sind, auf einer Bodenfläche eines Behälters angeordnet sind, in dem das Gelierungslösungsmittel aufgenommen ist.

7. Verfahren zur Herstellung eines Lithiumtitanatkorns nach Anspruch 2, worin das Gelierungslösungsmittel, in das die kondensierte flüssige Lithiumtitanatlösung eingetropft wird, Aceton ist.

8. Verfahren zur Herstellung eines Lithiumtitanatkorns nach Anspruch 7, worin das Austauschlösungsmittel, dessen Oberflächenspannung größer als jene von Aceton ist, ein flüssige Mischlösung aus Aceton und Propylenglykol ist.

## Revendications

1. Méthode de fabrication d'un boulet de titanate de lithium, comprenant les étapes de :

soumettre une solution liquide comprenant un élément lithium et un élément titane à une formation de goutte afin de former une goutte ; mettre la goutte formée à un état solide, alors qu'une forme de la goutte est maintenue, afin de former une goutte à l'état solide ; et fritter la goutte formée à l'état solide.

2. Méthode de fabrication d'un boulet de titanate de lithium selon la revendication 1, où l'amélioration comprend :

une étape de préparation d'une solution liquide pour préparer une solution liquide condensée de titanate de lithium en soumettant une poudre de matière première de titanate de lithium à une formation d'une solution liquide afin de former une solution liquide et la condensation de la solution liquide formée ; une étape de formation d'une sphère de gel pour former une sphère de gel en égouttant la solution liquide condensée de titanate de lithium obtenue à l'étape de préparation de la solution liquide dans un solvant de gélification afin de former une sphère de gel primaire tout en maintenant sa forme de goutte, en vieillissant la sphère de gel primaire formée afin de former une sphère de gel mouillé, en échangeant un solvant dans les pores de la sphère de gel mouillé, formée en immergeant la sphère de gel mouillé formée dans un solvant d'échange ayant une tension de surface plus grande que celle du solvant de gélification et en séchant la sphère de gel mouillé après échange de solvant ; et une étape de frittage du boulet pour préparer un boulet de titanate de lithium en frittant la sphère de gel formée obtenue à l'étape de formation de la sphère de gel.

3. Méthode de fabrication d'un boulet de titanate de lithium selon la revendication 2, où une poudre ou un boulet d'un titanate de lithium usé est utilisé en tant que poudre de matière première de titanate de lithium.

4. Méthode de fabrication d'un boulet de titanate de lithium selon la revendication 2, où l'étape de préparation d'une solution liquide comprend les étapes de :

dissoudre la poudre de matière première de titanate de lithium par une solution de peroxyde d'hydrogène afin de préparer une solution liquide de titanate de lithium ;
dégazer la solution liquide préparée de titanate de lithium et
condenser la solution liquide de titanate de lithium après dégazage par une évaporation afin de former la solution liquide condensée de titanate de lithium pour l'égouttement.

5. Méthode de fabrication d'un boulet de titanate de lithium selon la revendication 2, où, à l'étape d'égouttement de la solution liquide condensée de titanate de lithium dans le solvant de gélification, un guide incliné est placé dans un conteneur recevant le solvant de gélification à partir d'un niveau de liquide du solvant de gélification jusqu'à une surface inférieure du conteneur et la solution liquide condensée de titanate de lithium égouttée roule ou glisse à partir du niveau du liquide du solvant de gélification jusqu'à la surface du fond du conteneur.

6. Méthode de fabrication d'un boulet de titanate de lithium selon la revendication 2, où une portion concave et une portion convexe ayant une dimension un peu plus grande que celle de la solution liquide condensée égouttée de titanate de lithium sont agencées sur une surface du fond d'un conteneur recevant le solvant de gélification.

7. Méthode de fabrication d'un boulet de titanate de lithium selon la revendication 2, où le solvant de gélification dans lequel s'égoutte la solution liquide condensée de titanate de lithium est de l'acétone.

8. Méthode de fabrication d'un boulet de titanate de lithium selon la revendication 7, où le solvant d'échange ayant une tension de surface plus grande que celle de l'acétone est une solution liquide mélangée d'acétone et de propylène glycol.

# FIG. 1

Liquid solution preparing

- $Li_2TiO_3$ raw material powder
- $H_2O_2$ aq. (30%)

Dissolving

$Li_2TiO_3$ liquid solution

Degassing / Condensing

$Li_2TiO_3$ condensed liquid solution

Acetone

Gel sphere forming

Dropping

Gelation

Aging

Solvent exchanging

Drying

Pebble sintering

Sintering

$Li_2TiO_3$ pebbles

EP 1 138 650 B1

# FIG. 2

**Wet gel** | **Drying step** | **Dry gel**

(Solvent exists in between gel bone structures)

(Solvent vapors)

Solvent
Gel bone structure

Solvent vaporing

Solvent

Pore

Spaces in wet gel remain as pores in dry gel after solvent vapors

# FIG. 3

**Wet gel** | **Drying step** | **Dry gel**

(Solvent exists in between gel bone structures)

(Solvent vapors)

(Densified due to surface tension of solvent)

Solvent
Gel bone structure

Solvent vaporing

Solvent

Capillary action serves to spaces in wet gel during drying step
(Capillary action becomes larger if surface tension of solvent becomes larger)

# FIG. 4

20kU X75    100μm 990629

# FIG. 5

20kU X10,000    1μm 990629

## FIG. 6

## FIG. 7